# EUROPÄISCHE PATENTSCHRIFT

(11) **EP 2 213 812 B1**
(45) Veröffentlichungstag und Bekanntmachung des Hinweises auf die Patenterteilung: **07.03.2012**
(21) Anmeldenummer: 09001179.2
(22) Anmeldetag: 28.01.2009
(51) Int. Cl.: E04F 15/02, F16B 5/00

(54) **Paneel, insbesondere Bodenpaneel**
Panelling, in particular floor panelling
Panneau, en particulier panneau de sol

(43) Veröffentlichungstag der Anmeldung: 04.08.2010
(73) Patentinhaber: Flooring Technologies Ltd., Pieta MSD 08 (MT)
(72) Erfinder:
(74) Vertreter: Rehmann, Thorsten

(56) Entgegenhaltungen:
- WO-A-2008/116623
- DE-A1- 19 823 357
- DE-A1-102005 002 297
- DE-A1-102007 020 271
- DE-U1- 20 008 708
- FR-A- 2 498 666

## Beschreibung

Die Erfindung betrifft ein Paneel, insbesondere ein Bodenpaneel, mit einem Kern aus Holzwerkstoff oder Holzwerkstoff-Kunststoff-Gemisch, einer Oberseite und einer Unterseite, das an mindestens zwei sich gegenüberliegenden Seitenkanten mit zueinander korrespondierenden Hakenelementen versehen ist, wobei das erste Hakenelement durch eine im Wesentlichen zur Oberseite offene Profilierung und das zweite Hakenelement durch eine im Wesentlichen zur Unterseite offene Profilierung gebildet wird, die an dem ersten Hakenelement einen im Wesentlichen zur Oberseite gerichteten Vorsprung und an dem zweiten Element einen im Wesentlichen zur Unterseite gerichteten Vorsprung ausbildet, und zumindest eines der Hakenelemente ein Federelement ist, das bei der Fügebewegung in horizontaler Richtung ausweicht und anschließend zum Zwecke der vertikalen Verriegelung hinter eine sich im Wesentlichen in horizontaler Richtung erstreckende Verriegelungskante einschnappt, und zumindest eines der Hakenelemente segmentiert ist und sich dadurch eine Mehrzahl parallel beabstandeter Federelemente ausbildet.

Ein solches Paneel ist beispielsweise aus der DE 10 2007 020 271 A1 bekannt.

Auch bei den aus der DE 10 2007 015 048 A1 bekannten Paneelen ist das Verriegelungselement, das die sich in, horizontaler Richtung erstreckende Verriegelungsfläche aufweist, gegenüber dem Kern freigeschnitten, wodurch bei der Absenkbewegung das Verriegelungselement eine ausweichende Bewegung ausführen kann. Bei geringer Paneelstärke, insbesondere bei Paneelen mit einer Stärke von 6 oder 7 mm, reicht die Steifigkeit solcher Verbindungen oftmals nicht aus. Bei den üblichen Tests mit Stuhlrollen (DIN 13329) können durch die vielfache Wechselbelastung leichte Höhenversätze zwischen benachbarten Paneelen entstehen, insbesondere im Bereich der querseitigen Verriegelung, was bei ungünstigem Lichteinfall sofort sichtbar wird, wodurch der Bodenbelag den Eindruck mangelnder Qualität erwecken kann.

Aus der DE 102 24 540 A1 ist ein Fußbodenpaneel bekannt, das in horizontaler Ebene von einer mit einer Dekorschicht versehenen Oberseite und einer zur Auflage auf einem Unterboden vorgesehenen Unterseite begrenzt ist, das mit Mitteln zum lösbaren Verbinden mindestens zweier Paneele versehen ist, wobei an mindestens einer ersten Seitenkante die Verbindungsmittel dergestalt ausgebildet sind, dass eine Verriegelung in Querrichtung und in Vertikalrichtung erfolgt, wobei an einer zweiten, im Winkel zu der ersten Seitenkante verlaufenden Seitenkante Formschlusselemente zur Verriegelung in Vertikalrichtung mit weiteren Paneelen ausgebildet sind. Bei diesem Fußbodenpaneel sind die Formschlusselemente an zwei zueinander beabstandeten, im Wesentlichen vertikal ausgerichteten Wandungen in Querrichtung und in Vertikalrichtung voneinander beabstandet ausgebildet. Damit das Zusammenfügen zweier Paneele möglich bleibt, können die horizontal ausgerichteten Verriegelungsflächen nur sehr klein dimensioniert werden. Die Querausdehnung liegt im Bereich von etwa 0,05 bis 1,0 mm. Dadurch ergibt sich zwangsläufig aber auch nur die Möglichkeit, geringe vertikal gerichtete Kräfte aufzunehmen, so dass mit äußerst geringen Toleranzen gefertigt werden muss, um sicherzustellen, dass nicht bereits bei leichten Bodenunebenheiten und/oder weichen Untergründen die Verbindung bei normaler Belastung aufspringt.

Aus der DE 101 59 284 A1 ist ein Bodenpaneel mit einem Kern aus Holzwerkstoff bekannt, das an wenigstens einer Seitenkante über deren Länge eine eine Oberlippe und eine Unterlippe ausbildende Nut aufweist und an der gegenüberliegenden Seitenkante mit einer zur Nut korrespondierenden Feder ausgebildet ist. Zur Verriegelung miteinander verbundener Paneele ist die Feder mit mindestens einem Vorsprung versehen, und die Nut weist an der dem mindestens einen Vorsprung gegenüberliegenden Lippe mindestens eine Vertiefung auf. Dabei ist die Vertiefung länger als der Vorsprung, und die mit der Vertiefung versehene Lippe weist an der Seitenkante mindestens eine bis an die Vertiefung heranreichende Ausnehmung auf, wobei die Länge der Ausnehmung mindestens so groß ist wie die Länge des Vorsprungs. Bezogen auf die Längsrichtung sind die Ausnehmungen und der Vorsprung zueinander versetzt. Die Verbindung zweier Paneele erfolgt durch diese Ausgestaltung bajonettartig indem zunächst eine in Querrichtung der Paneele weisende Fügebewegung durchgeführt wird, so dass die Feder in die Nut eingesetzt wird und anschließend durch eine in Längsrichtung gerichtete Bewegung die Verriegelung der beiden Paneele nach Art eines Bajonettverschlusses erfolgt.

Diese Profilierung der Seitenkanten ist konstruktiv sehr aufwendig und das Verlegen der Paneele teilweise kompliziert, weil sichergestellt sein muss, dass die Federn über die volle Länge der Seitenkanten in die Nuten eingetaucht sind. Wird dann die abschließende Verriegelungsbewegung nicht völlig parallel zur Paneellängsachse durchgeführt, besteht die Gefahr, dass sich das zu verriegelnde Paneel verkantet und die Feder aus der Nut herausschwenkt, so dass ein Verriegeln nicht mehr möglich ist.

Die DE 198 23 357 A1 offenbart eine Wandfliese mit einem im Wesentlichen flachen, quaderförmigen Grundkörper, der eine Sichtfläche, eine Befestigungsfläche sowie die Sichtfläche mit der Befestigungsfläche verbindende Stirnflächen aufweist. An wenigstens einer der Stirnseiten ist ein mit der Fliese integrierter Abstandshalter angeordnet, der Mittel zur Kompensation einer thermischen Längenausdehnung der Fliese umfasst. Diese Abstandshalter sind hakenförmig profiliert, sodass zwei Fliesen über eine vertikale Absenkbewegung miteinander verbunden werden können.

Auch die DE 200 08 708 U1 offenbart Paneele mit hakenförmig profilierten Seitenkanten, die durch eine vertikale Absenkbewegung miteinander formschlüssig verbunden werden können.

Aus der WO 2008/116623 A1 sind Bodenpaneele bekannt, die an mindestens zwei sich gegenüberliegenden Seitenkanten eine solche zueinander korrespondierende Profilierung aufweisen, dass zwei identisch ausgebildete Paneele durch eine im Wesentlichen vertikale Fügebewegung in horizontaler und vertikaler Richtung miteinander verbindbar und verriegelbar sind. Die Verriegelung in vertikaler Richtung wird durch ein in horizontaler Richtung bewegbares Federelement bewirkt, dass bei der Fügebewegung hinter eine sich im Wesentlichen in horizontaler Richtung erstreckende Verriegelungskante einschnappt. Dieses Federelement ist einstückig aus dem Kern herausgebildet.

Von dieser Problemstellung ausgehend soll das eingangs beschriebene Paneel so verbessert werden, dass die Profilierung der Hakenelemente so verbessert wird, dass eine sichere Verriegelung gewährleistet ist.

Zur Problemlösung zeichnet sich ein gattungsgemäßes Paneel dadurch aus, dass die Federelemente in einem Winkel zur Längsachse schräg verlaufend angeordnet sind.

Eine solche Verriegelung ist besonders für die Querseite miteinander zu verbindender Paneele geeignet. Die Hakenelemente an den gegenüberliegenden Seitenkanten hintergreifen einander und verriegeln dadurch zwei Paneele in horizontaler und in vertikaler Richtung. Durch die Segmentierung werden die elastisch auslenkbaren Vorsprünge der Hakenelemente verdrängt und schnappen in der Endlage der Paneele wieder in ihre Ausgangslage zurück, wodurch die vertikale Verriegelung erfolgt. Dadurch, dass die Federelemente im Winkel zur Seitenkante (Längsachse) verlaufen, wird es dem jeweiligen unteren Hakenelement ermöglicht, bei der Verbindung zweier Paneele seitlich auszuweichen.

Vorzugsweise weisen beide Vorsprünge einen Hinterschnitt auf, und jeder Hinterschnitt weist eine sich im Wesentlichen in horizontaler Richtung erstreckende Verriegelungskante auf.

Wenn die Federelemente an dem zur Oberseite offenen Hakenelement ausgebildet sind, wird die Verlegung der Paneele vereinfacht, weil die Absenkbewegung des neu anzulegenden Profils vergleichmäßig wird.

Wenn die Unterseite der Federelemente zumindest im Bereich des Vorsprunges an der Unterseite im zweiten Winkel β gegenüber der Horizontalen abgeschrägt sind, wird genügend Ausweichraum zur Verfügung gestellt, damit beim Verriegeln das Federelement auch eine Schwenkbewegung ausführen kann.

Die Ausweichbewegung der Federelemente setzt sich aus mehreren Bewegungen zusammen. Hauptsächlich werden die Federelemente durch den oberen Vorsprung in Richtung der Paneellängsachse verdrängt. Durch die schräg zur Längsachse verlaufenden Schlitze können die Federelemente jedoch auch in Querrichtung des Paneels ausweichen. Die Biegesteifigkeit der Federelemente in Querrichtung wird hauptsächlich durch deren Breite definiert. Die durch die Verriegelungskraft hervorgerufene horizontale Auslenkung des Vorsprungs in Querrichtung führt zu einer Aufweitung der Nut, so dass die Hinterschneidung des einen Vorsprunges die Hinterschneidung des anderen Vorsprunges hintergreift. Die Ausweichbewegungen des Federelementes können von einer Drehung um eine in Querrichtung verlaufende Achse überlagert werden, wenn das Federelement genügend Platz nach unten zum Ausweichen hat.

Der zweiten Winkel β ist vorzugsweise kleiner/gleich 10°.

Die Federelemente sind vorzugsweise zueinander regelmäßig beabstandet.

Das Verfahren zum Verbinden und Verriegeln zweier erfindungsgemäß ausgestalteter Paneele erfolgt dadurch, indem das anzufügende Paneel mit dem nach unten offenen Hakenelement um eine nahe und parallel zur Längsseite liegende Schwenkachse in das am Boden liegende Paneel in das zur Oberseite offene Hakenelement eingeschwenkt wird, und dabei der Vorsprung des zur Unterseite offenen Hakenelementes die Vorsprünge der Federelemente nacheinander erfasst und elastisch ausbiegt, so dass diese Ausweichen und jeder Vorsprung des Federelementes zurückfedert, wenn der in ihm ausgebildete Hinterschnitt in Überdeckung zu dem im Vorsprung des nach unten offenen Hakenelementes gelangt, wobei sich die Ausweichbewegung der Federelemente in die folgenden drei Bewegungen aufteilt:
a) Verdrängung des Vorsprungs in Richtung der Längsachse des Paneels,
b) Ausweichen des Vorsprungs in Querrichtung des Paneels,
c) Aufweiten der zwischen dem Vorsprung und der Seitenkante ausgebildeten, nach oben offenen Nut.

Das Aufweiten der Nut kann überlagert werden von einer Schwenkbewegung des Vorsprunges um eine parallel zur Querseite des Paneels verlaufenden Achse.

Mit Hilfe einer Zeichnung sollen Ausführungsbeispiele der Erfindung nachfolgend näher erläutert werden.

Es zeigt:
- Figur 1: die perspektivische Darstellung zweier Paneele während des Verbindungsvorganges;
- Figuren 2a bis 2d: einzelne Stufen der Verriegelung;

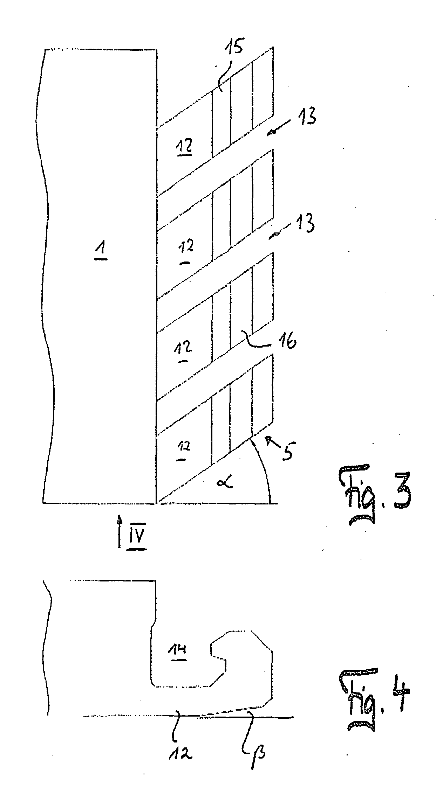

- Figur 3: die Teildraufsicht auf ein Paneel;
- Figur 4: die Seitenansicht gemäß Sichtpfeil IV nach Figur 3;

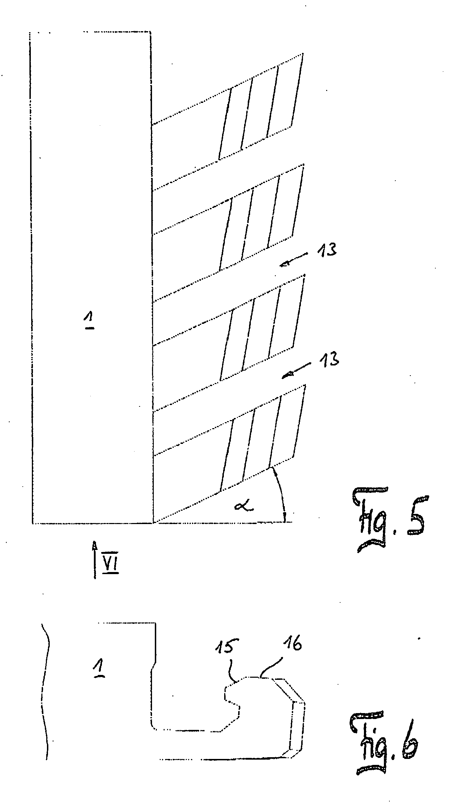

- Figur 5: die Draufsicht auf das Paneel in der Verriegelungsstellung nach Figur 2c;
- Figur 6: die Ansicht des Paneels gemäß Sichtpfeil VI nach Figur 5;
- Figur 7: die perspektivische Teildarstellung einer weiteren Ausführungsform eines Paneels;
- Figur 8: die perspektivische Darstellung zweier Paneele während des Verbindungsvorganges in einer weiteren Ausführungsform.

Die Paneele 1, 2 sind identisch ausgebildet. Sie bestehen aus einem Kern 17 aus Holzwerkstoff oder einem Holzwerkstoff-Kunststoff-Gemisch. Die Längsseite eines Paneels ist in der Regel länger als seine Querseite. In der Zeichnung sind die Paneele 1; 2 an der Verbindungsstelle ihrer Querseite gezeigt. An ihren sich gegenüberliegenden Seitenkanten I, II sind die Paneele 1, 2 profiliert, wobei die Seitenkante I von der Oberseite 18 und die Seitenkante II von der Unterseite 19 fräsend bearbeitet wurde.

Dadurch werden zwei zueinander korrespondierende Hakenelemente 4, 6 ausgebildet, wobei das Hakenelement 4 einen zur Oberseite 18 gerichteten Vorsprung 5 und das Hakenelement 6 einen zur Richtung der Unterseite 19 gerichteten Vorsprung 7 umfasst. Beide Hakenelemente 4, 6 sind mit Hinterschnitten 8, 9 versehen. Der Hinterschnitt 8 wird gebildet durch ein seitlich vom Vorsprung 7 in Richtung des Kerns 17 hervorspringendes Verriegelungselement 3. Die Hinterschnitte 8, 9 weisen je eine sich im Wesentlichen in horizontaler Richtung erstreckende Verriegelungskante 10, 11 auf. Wie den Figuren entnehmbar ist, können die Verriegelungskanten 10, 11 in einem Winkel zur Horizontalen H verlaufen. Ihre Verriegelungswirkung ist aber in vertikaler Richtung V gerichtet, so dass die Verriegelungskanten trotz dessen im Wesentlichen in horizontaler Richtung verläuft.

Das Hakenelement 4 ist federelastisch ausgebildet und segmentiert, so dass sich einzelne Federelemente 4 ausbilden, die regelmäßig zueinander beabstandet sind. Die Elastizität der Federelemente 4 ergibt sich einerseits durch die dünne Unterlippe 12, die von der Seitenkante I nach außen hervorsteht und an deren äußerem Ende sich der Vorsprung 5 anschließt und andererseits durch die im Winkel α in vertikaler Richtung V durchgängig durch das Hakenelement 4 hindurch in regelmäßigen Abständen eingebrachten Schlitze 13. Jedes Federelement 4 ist also nur an einer Seite mit dem Kern 17 des Paneels 1 verbunden. Im Bereich des Vorsprunges 5 verläuft die Unterlippe 12 im zweiten Winkel β gegenüber der Horizontalen geneigt.

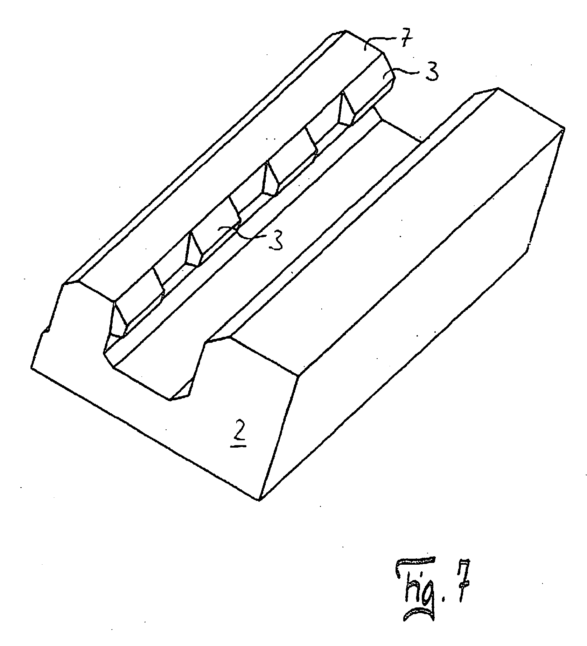

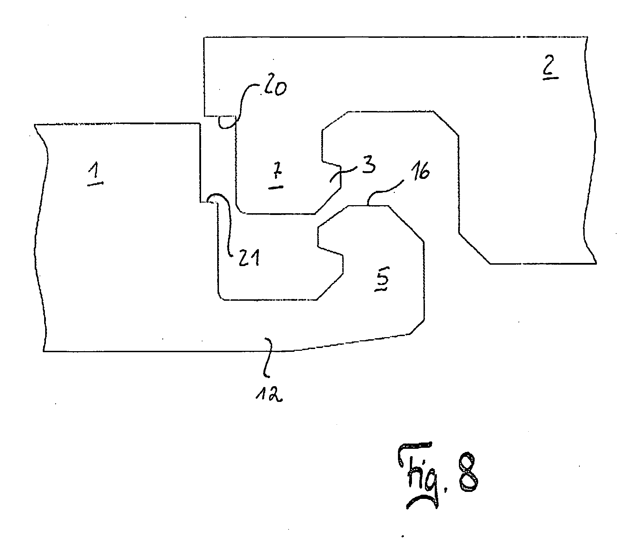

Wie Figur 7 zeigt, kann das Verriegelungselement 3 segmentiert sein, so dass sich eine Vielzahl parallel beabstandeter Verriegelungselemente 3 einstellt. Um den Höhenversatz zweier miteinander verbundener Paneele unabhängig von der Verriegelungsfunktion einstellen zu können, ist bei dem in Figur 8 gezeigten Ausführungsbeispiel der Paneele 1, 2 je eine horizontale Anlagefläche 20, 21 vorgesehen.

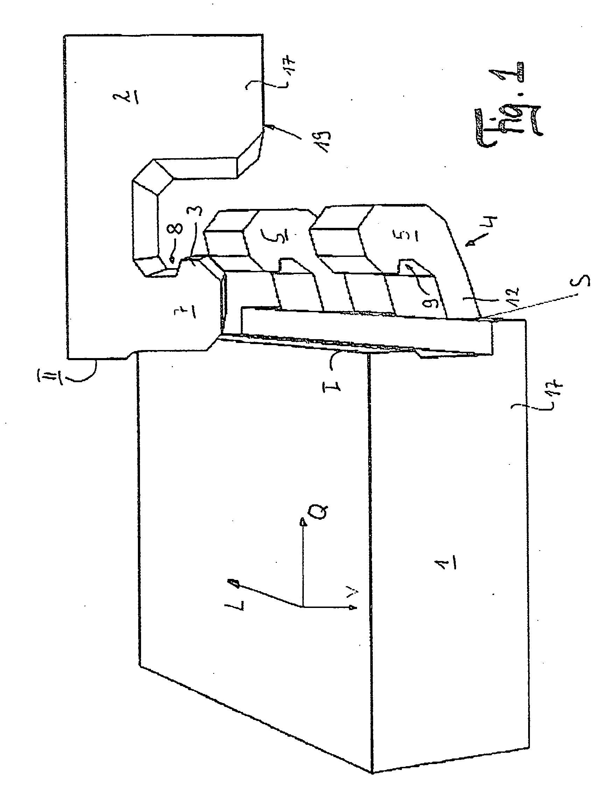

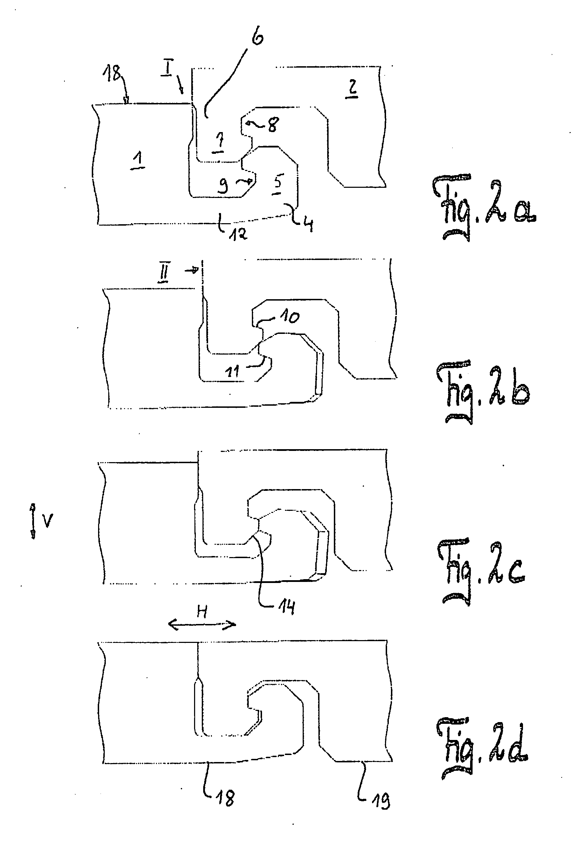

Die Figuren 1 und 2a bis 2d verdeutlichen den Verriegelungsvorgang. An der hier nicht dargestellten Längsseite sind die Paneele 1, 2 mit einer Profilierung versehen, mit der es möglich ist, ein neu anzusetzendes Paneel 2 in einem Winkel in die Längsseite eines bereits am Boden liegenden Paneels einzufügen und dann zum Verbinden/Verriegeln der Längsseite auf den Unterboden abzuwinkeln. Ein solches Profil ist beispielsweise in der DE 102 24 540 A1 offenbart, auf deren Offenbarungsinhalt vollständig Bezug genommen wird. An der Querseite - der kurzen Seite eines Paneels 1, 2 - ist die erfindungsgemäße Profilierung vorgesehen. Das neu anzulegende Paneel 2 wird an der Längsseite eines bereits am Boden liegenden Paneels angebunden und mit seiner Seitenkante 2 dicht an ein ebenfalls bereits an seiner Längsseite mit einem bereits verlegten Paneel verbundenen Paneel 1 angelegt. Beim Herabschwenken kommt der Vorsprung 7 mit seiner abgeschrägten Unterseite 14 in Kontakt mit der abgeschrägten Oberseite 15 des Vorsprungs 5 (Figur 2a), wodurch der Vorsprung 5 zunächst in Querrichtung Q ausweicht, so dass die Nut 12, die sich zwischen der Seitenkante I und dem Vorsprung 5 ausbildet, aufgeweitet wird. Dadurch, dass jedes einzelne Federelement 4 durch den im Winkel α schräg verlaufenden Schlitz gegenüber dem Kern 17 in Längsrichtung L des Paneels 1 freigelegt ist, kann das Hakenelement 5 bei einer weiteren Absenkbewegung des Paneels 2 auch in Längsrichtung L des Paneels 1 ausweichen. Gleichzeitig findet eine Schwenkbewegung des Vorsprunges 5 um einen zur Längsrichtung L des Paneels 1 parallel verlaufende Schwenkachse S statt. Um diese Schwenkbewegung zu ermöglichen, ist die Unterlippe 12 zumindest im Bereich des Vorsprunges 5 im zweiten Winkel β abgeschrägt. Die Schwenkbewegung wird solange ausgeführt, bis die Unterlippe 12 in diesem Bereich auf dem Unterboden aufliegt, wodurch eine weitere Schwenkbewegung verhindert wird (vgl. Figur 2c). Beim weiteren Absenken des Paneels 2 kommen die Hinterschnitte 8, 9 zueinander in Überdeckung. Der Vorsprung 5 federt um die Schwenkachse S elastisch zurück und die Hakenelemente 4, 6 verhaken sich ineinander, wobei die Verriegelungsflächen 10, 11 aneinander liegen. Die miteinander verriegelten Paneele 1, 2 liegen im oberen Bereich der Seitenkanten I, II dicht aneinander an. Wie Figur 2d zeigt, haben die Flächen 15, 16 des Vorsprungs 5 keinen Kontakt mit dem Paneel 2.

Die vorstehende beschriebene Profilverbindung hat den Vorteil, dass sie einteilig aus dem Kernmaterial herausgearbeitet ist, keine Fremdteile benötigt und dadurch weniger Fertigungstoleranzen als sonst einzuhalten sind. In Folge der höheren Steifigkeit können in vertikaler Richtung mehrere Kräfte übertragen werden. Die profilierung ist auch für dünne Paneele geeignet und zur Herstellung bedarf es nur auf einer Seite bewegliche Werkzeuge, vorzugsweise Tauchfräser. Die Herstellung erfolgt im Wesentlichen wie in der DE 10 2007 015 048 A1 beschrieben. Zur Herstellung der Hinterschnitte 8, 9 werden die Hakenelemente 4, 5 mittels eines - nicht gezeigten - stehenden Werkzeuges bearbeitet. Die schräg zur Längsachse L des Paneels verlaufenden Schlitze 13 werden durch in vertikaler Richtung V in den Kern 17 eintauchende Fräswerkzeuge erzeugt, während sich das Paneel 1 an einer Bearbeitungsstation vorbeibewegt (nicht gezeigt). Da die eintauchenden Fräswerkzeuge schräg zur Transportrichtung stehen, müssen sie derart geschliffen sein, dass sie sowohl in Richtung des Eintauchens als auch in Transportrichtung des Paneels 1 schneiden. Damit entsteht ein sogenannter ziehender Schnitt.

### Bezugszeichenliste

- 1: Paneel
- 2: Paneel
- 3: Verriegelungselement
- 4: Hakenelement/Federelement
- 5: Vorsprung
- 6: Hakenelement
- 7: Vorsprung
- 8: Hinterschnitt
- 9: Hinterschnitt
- 10: Verriegelungskante
- 11: Versiegelungkante
- 12: Unterlippe
- 13: Spalt/Schlitz
- 14: Nut
- 15: Fläche
- 16: Fläche
- 17: Kern
- 18: Oberseite
- 19: Unterseite
- 20: Fügekante
- 21: Fügekante
- I: Seitenkante
- II: Seitenkante
- α: Winkel
- β: zweiten Winkel
- L: Längsrichtung des Paneels
- Q: Querrichtung des Paneels
- V: vertikale Richtung

## Patentansprüche

1. Paneel, insbesondere Bodenpaneel (1, 2), mit einem Kern (17) aus Holzwerkstoff oder Holzwerkstoff-Kunststoff-Gemisch, einer Oberseite (18) und einer Unterseite (19), das an mindestens zwei sich gegenüberliegenden Seitenkanten (I, II) mit zueinander korrespondierenden Hakenelementen (4, 6) versehen ist, wobei das erste Hakenelement (4) durch eine im Wesentlichen zur Oberseite (18) offene Profilierung und das zweite Hakenelement (6) durch eine im Wesentlichen zur Unterseite (19) offene Profilierung gebildet wird, die an dem ersten Hakenelement (4) einen im Wesentlichen zur Oberseite (18) gerichteten Vorsprung (5) und an dem zweiten Hakenelement (6) einen im Wesentlichen zur Unterseite (19) gerichteten Vorsprung (7) ausbildet, wobei zwei identisch ausgebildete Paneele durch eine im Wesentlichen vertikale Fügebewegung in horizontaler (H) und vertikaler (V) Richtung miteinander verbindbar und verriegelbar sind, und zumindest einer der Vorsprünge (5, 7) bei der Fügebewegung in horizontaler Richtung (H) ausweicht und anschließend zum Zweck der vertikalen Verriegelung hinter eine sich im Wesentlichen in horizontaler Richtung (H) erstreckenden Verriegelungskante (10) einschnappt, und zumindest eines der Hakenelemente (4) segmentiert ist und sich **dadurch** eine Mehrzahl parallel beabstandeter Federelemente (4) ausbildet, **dadurch gekennzeichnet, dass** die Federelemente (4) in einem Winkel (α) zur Längsachse (L) schräg verlaufend angeordnet sind.

2. Paneel nach Anspruch 1, **dadurch gekennzeichnet, dass** beide Vorsprünge (5, 7), einen Hinterschnitt (8, 9) aufweisen und jeder Hinterschnitt (8, 9) eine sich im Wesentlichen in horizontaler Richtung (H) erstreckende Verriegelungskante (10, 11) aufweist.

3. Paneel nach Anspruch 1 oder 2, **dadurch gekennzeichnet, dass** das die Federelemente ausbildende Hakenelement (4) das zur Oberseite offene Hakenelement (4) ist.

4. Paneel nach einem der Ansprüche 1 bis 3, **dadurch gekennzeichnet, dass** die Unterseite des Federelementes (4) zumindest im Bereich des Vorsprunges (5) im zweiten Winkel (β) gegenüber der Horizontalen (H) abgeschrägt ist.

5. Paneel nach Anspruch 4, **dadurch gekennzeichnet, dass** der zweiten Winkel (ß) = 10° ist.

6. Paneel nach einem oder mehreren der vorstehenden Ansprüche, **dadurch gekennzeichnet, dass** die Federelemente (4) zueinander regelmäßig beabstandet sind.

7. Verfahren zum Verbinden und Verriegeln zweier Paneele (1, 2) nach einem der vorstehenden Ansprüche, in dem das anzufügende Paneel (2) mit dem nach unten offenen Hakenelement (6) um eine nahe und parallel zur Längsseite liegende Drehachse geschwenkt wird und dabei das zur Unterseite (19) hin offene Hakenelement (6) stetig und nacheinander in die zur Oberseite (18) offenen Hakenelemente (4) eines am Boden liegenden Paneels (1) eingeschwenkt wird, und dabei der Vorsprung (7) die Vorsprünge (5) der Federelemente (4) nacheinander erfasst und elastisch ausbiegt, und jeder Vorsprung (5) jedes Federelementes (4) zurückfedert, wenn der in ihm ausgebildete Hinterschnitt (9) in Überdeckung zu dem im Vorsprung (7) gelangt, wobei sich die Ausweichbewegung der Federelemente (5) in folgende drei Bewegungen unterteilt:
a) Verdrängung des Vorsprungs (5) in Querrichtung (Q) des Paneels (1),
b) Ausweichen des Vorsprungs (5) in Längsrichtung (L) des Paneels (1),
c) Aufweiten der zwischen dem Vorsprung (5) und der Seitenkante (1) ausgebildeten, nach oben offenen Nut (14).

8. Verfahren nach Anspruch 7, **dadurch gekennzeichnet, dass** das Aufweiten der Nut (14) überlagert wird von einer Schwenkbewegung des Vorsprungs (5) um eine in Längsrichtung (L) weisende Schwenkachse (S).

## Claims

1. Panel, in particular floor panel (1, 2), having a core (17) made of wood-based material or a wood-based material/synthetic material mixture, a top side (18) and a bottom side (19), which panel is provided, on at least two mutually opposite lateral edges (I, II), with hook elements (4, 6) which correspond to one another, wherein the first hook element (4) is formed by a profiling which is substantially open towards the top side (18) and the second hook element (6) is formed by a profiling which is substantially open towards the bottom side (19), which profiling forms on the first hook element (4) a projection (5) directed substantially towards the top side (18) and on the second hook element (6) a projection (7) directed substantially towards the bottom side (19), wherein two identically formed panels can be connected and locked together by a substantially vertical joining movement in the horizontal (H) and vertical (V) direction, and at least one of the projections (5, 7) deflects in the horizontal direction (H) during the joining movement and then, for the purpose of vertical locking, snaps in behind a locking edge (10) extending substantially in the horizontal direction (H), and at least one of the hook elements (4) is segmented and thereby forms a plurality of parallel spaced-apart spring elements (4), **characterized in that** the spring elements (4) are arranged so as to extend obliquely at an angle (α) to the longitudinal axis (L).

2. Panel according to Claim 1, **characterized in that** both projections (5, 7) have an undercut (8, 9) and each undercut (8, 9) has a locking edge (10, 11) extending substantially in the horizontal direction (H).

3. Panel according to Claim 1 or 2, **characterized in that** the hook element (4) forming the spring elements is the hook element (4) which is open towards the top side.

4. Panel according to one of Claims 1 to 3, **characterized in that**, at least in the region of the projection (5), the bottom side of the spring element (4) is bevelled with respect to the horizontal (H) at a second angle (β).

5. Panel according to Claim 4, **characterized in that** the second angle (β) = 10°.

6. Panel according to one or more of the preceding claims, **characterized in that** the spring elements (4) are uniformly spaced apart.

7. Method for connecting and locking two panels (1, 2) according to one of the preceding claims, in which the panel (2) to be joined on is pivoted by the downwardly open hook element (6) about an axis of rotation situated close and parallel to the longitudinal side, and in so doing the hook element (6) open towards the bottom side (19) is pivoted continuously and successively into the hook elements (4), which are open towards the top side (18), of a panel (1) situated on the floor, and at the same time the projection (7) grasps the projections (5) of the spring elements (4) in succession and bends them elastically outwards, and each projection (5) of each spring element (4) springs back when the undercut (9) formed therein overlaps with that in the projection (7), wherein the deflecting movement of the spring elements (4) is divided into the following three movements:
(a) displacement of the projection (5) in the transverse direction (Q) of the panel (1),
(b) deflection of the projection (5) in the longitudinal direction (L) of the panel (1),
(c) widening of the upwardly open groove (14) formed between the projection (5) and the lateral edge (I).

8. Method according to Claim 7, **characterized in that** the widening of the groove (14) is superimposed by a pivoting movement of the projection (5) about a pivot axis (S) pointing in the longitudinal direction (L).

## Revendications

1. Panneau, en particulier panneau de plancher (1, 2), comprenant une âme (17) en matériau dérivé du bois ou en un mélange de matériau dérivé du bois et de matière synthétique, un côté supérieur (18) et un côté inférieur (19), panneau qui est muni sur au moins deux bords latéraux (I, II) opposés de deux éléments en crochet (4, 6) se correspondant mutuellement, le premier élément en crochet (4) étant formé par un profilage ouvert sensiblement vers le côté supérieur (18) et le deuxième élément en crochet (6) étant formé par un profilage ouvert sensiblement vers le côté inférieur (19), profilage qui forme sur le premier élément en crochet (4) un bossage (5) dirigé sensiblement vers le côté supérieur (18) et sur le deuxième élément en crochet (6) un bossage (7) dirigé sensiblement vers le côté inférieur (19), deux panneaux formés identiques pouvant être reliés et verrouillés ensemble en direction horizontale (H) et verticale (V) par un mouvement d'assemblage sensiblement vertical et l'un au moins des bossages (5, 7) étant dévié dans la direction horizontale (H) lors du mouvement d'assemblage et s'encliquetant ensuite, en vue du verrouillage vertical, derrière un bord de verrouillage (10) s'étendant sensiblement en direction horizontale (H), et l'un au moins des éléments en crochet (4) étant segmenté et formant ainsi plusieurs éléments ressorts (4) parallèles espacés les uns des autres, **caractérisé en ce que** les éléments ressorts (4) sont agencés s'étendant en biais avec un angle (α) par rapport à l'axe longitudinal (L).

2. Panneau selon la revendication 1, **caractérisé en ce que** les deux bossages (5, 7) présentent une contre-dépouille (8, 9) et chaque contre-dépouille (8, 9) présente un bord de verrouillage (10, 11) s'étendant sensiblement dans la direction horizontale (H).

3. Panneau selon la revendication 1 ou 2, **caractérisé en ce que** l'élément en crochet (4) formant les éléments ressorts est l'élément en crochet (4) ouvert vers le côté supérieur.

4. Panneau selon l'une quelconque des revendications 1 à 3, **caractérisé en ce que** le côté inférieur de l'élément ressort (4) est chanfreiné au moins dans la région du bossage (5) d'un deuxième angle (β) par rapport à l'horizontale (H).

5. Panneau selon la revendication 4, **caractérisé en ce que** le deuxième angle (β) est =10°.

6. Panneau selon l'une ou plusieurs des revendications précédentes, **caractérisé en ce que** les éléments ressorts sont régulièrement espacés les uns des autres.

7. Procédé pour relier et verrouiller deux panneaux (1, 2) selon l'une quelconque des revendications précédentes, dans lequel on fait pivoter le panneau (2) à assembler ayant l'élément en crochet (6) ouvert vers le bas, autour d'un axe de rotation s'étendant à proximité et parallèlement au côté longitudinal et ainsi on rentre par pivotement, continument et successivement, l'élément en crochet (6) ouvert vers le côté inférieur (19) dans l'élément en crochet (4) ouvert vers le côté supérieur (18) d'un panneau (1) se trouvant sur le sol, et le bossage (7) vient ainsi successivement en prise avec, et fait fléchir élastiquement, les bossages (5) des éléments ressorts (4), et chaque bossage (5) de chaque élément élastique (4) revient élastiquement lorsque la contre-dépouille (9) formée dans ce bossage arrive en regard de celle du bossage (7), le mouvement de déviation des éléments ressort (5) se divisant en trois mouvements successifs :
a) déplacement du bossage (5) dans la direction transverse (Q) du panneau (1),
b) déviation du bossage (5) dans la direction longitudinale (L) du panneau (1),
c) élargissement de la rainure (14) ouverte vers le haut, formée entre le bossage (5) et le bord latéral (I).

8. Procédé selon la revendication 7, **caractérisé en ce qu'**on superpose à l'élargissement de la rainure (14) un mouvement de pivotement du bossage (5) autour d'un axe de pivotement (S) orienté en direction longitudinale (L).
